(19) **Europäisches Patentamt / European Patent Office / Office européen des brevets**

(11) **EP 4 692 208 A1**

(12) # EUROPEAN PATENT APPLICATION
published in accordance with Art. 153(4) EPC

(43) Date of publication:
**11.02.2026 Bulletin 2026/07**

(21) Application number: **24778908.4**

(22) Date of filing: **22.02.2024**

(51) International Patent Classification (IPC):
**C08L 23/08** (2025.01)    **C08J 7/00** (2006.01)
**C08K 5/13** (2006.01)    **C08K 5/17** (2006.01)
**C08K 5/372** (2006.01)    **C08K 5/3445** (2006.01)
**C08L 53/00** (2006.01)    **C08L 91/08** (2006.01)
**H01B 7/00** (2006.01)    **H01B 13/14** (2006.01)

(52) Cooperative Patent Classification (CPC):
(C-Sets available)
**C09D 7/63; B60R 16/0207; C08J 7/00; C08K 5/13; C08K 5/17; C08K 5/3445; C08K 5/372; C08L 23/08; C08L 23/0815; C08L 53/00; C08L 91/08; C09D 7/48; C09D 7/65; H01B 3/28; H01B 3/441;** (Cont.)

(86) International application number:
**PCT/JP2024/006555**

(87) International publication number:
**WO 2024/202765 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023050983**

(71) Applicants:
• **FURUKAWA ELECTRIC CO., LTD.**
  **Tokyo 100-8322 (JP)**
• **Furukawa Automotive Systems Inc.**
  **Inukami-gun, Shiga 522-0242 (JP)**

(72) Inventors:
• **TAKAHASHI, Kenji**
  **Tokyo 100-8322 (JP)**
• **WATANABE, Michimasa**
  **Tokyo 100-8322 (JP)**
• **ASANO, Minoru**
  **Inukami-gun, Shiga 522-0242 (JP)**
• **NAGAO, Akihiro**
  **Inukami-gun, Shiga 522-0242 (JP)**
• **OSUGA, Hideyuki**
  **Inukami-gun, Shiga 522-0242 (JP)**

(74) Representative: **Forstmeyer, Dietmar**
**Boeters & Lieck**
**Oberanger 32**
**80331 München (DE)**

(54) **RESIN COMPOSITION, RESIN COATING MATERIAL, INSULATED WIRE, WIRING HARNESS FOR AUTOMOBILE, AND METHOD FOR PRODUCING WIRING HARNESS FOR AUTOMOBILE**

(57) A resin composition, containing:
a component (A) being a base resin containing an ethylene-$\alpha$-olefin random copolymer including an $\alpha$-olefin component having 4 to 12 carbon atoms;
a component (B) being a wet dispersant;
a component (C) being an antioxidant; and
a component (D) being a crosslinking aid,
wherein the ethylene-$\alpha$-olefin random copolymer including the $\alpha$-olefin component having 4 to 12 carbon atoms has a crystallinity of 15 to 24%, and
wherein a content of the component (B) is 2 to 10 parts by mass with respect to 100 parts by mass of a content of the component (A).

**(Cont. next page)**

EP 4 692 208 A1

(52) Cooperative Patent Classification (CPC): (Cont.)
**H01B 3/442; H01B 13/14;** C08L 2203/202;
C08L 2205/03; C08L 2205/035; H01B 7/292;
H01B 7/295; H01B 13/145

C-Sets
**C08L 23/0815, C08L 23/0815, C08L 23/0815,
C08L 23/20, C08K 5/0066, C08K 5/098;
C08L 23/0815, C08L 23/0815, C08L 23/20,
C08K 5/0066, C08K 5/098;
C08L 23/0815, C08L 23/20, C08K 5/0066,
C08K 5/098;
C08L 23/0815, C08L 53/025, C08L 23/20,
C08K 5/0066, C08K 5/098**

**Description**

FIELD OF THE INVENTION

The present invention relates to a resin composition, a resin-coating material, an insulated wire, a vehicle wire harness, and a method of producing a vehicle wire harness.

BACKGROUND OF THE INVENTION

Insulated wires with flame retardancy are widely used for various kinds of white goods (house appliance) and OA equipment, etc. Further, characteristics such as flame retardancy, heat resistance, flexibility (a flexible property), and mechanical characteristics are also required for the insulated wires to be used in automobiles and the like. In the past, resin compositions for realizing insulated wires with flame retardancy, heat resistance, flexibility (a flexible property), and mechanical characteristics by using them as a coating material for the conductor have been studied and many reports thereon have been published.

For example, Patent Literature 1 describes an insulating resin composition capable of forming an insulating layer having excellent flexibility, high tensile strength, excellent adhesiveness to an adhesive used for water stop at a terminal, and stable extraction force. This insulating resin composition contains a resin component containing a first copolymer that is a copolymer of an unsaturated hydrocarbon having 4 or more carbon atoms and ethylene, a second copolymer that is a copolymer of an unsaturated hydrocarbon having 4 or more carbon atoms and ethylene and acid-modified and has a density of less than 0.88 g/cm$^3$, and a third copolymer that is a copolymer of an acrylic ester or the like and ethylene at a content ratio of the first to third copolymers within a specific range, and the insulating resin composition contains 30 to 100 parts by mass of a flame retardant and 1 to 5 parts by mass of a crosslinking aid with respect to 100 parts by mass of the resin component.

Patent Literature 2 describes a resin composition having flexibility and heat resistance sufficient for a coating layer of an electric wire. This resin composition contains a resin component containing an ethylene-(meth)acrylic ester copolymer and at least one of an ethylene-propylene-diene terpolymer or an ethylene-acrylate rubber, and contains a flame retardant, and the resin component is crosslinked.

Patent Literature 3 describes a heat-resistant resin composition that is excellent in high-temperature heat resistance, has high flexibility and high oil resistance, and has no problem in the appearance of a resin obtained by, for example, extrusion, and thus can be applied to a cabtire cable or the like. This heat-resistant resin composition contains specific amounts of components (A) to (E). Specifically, the heat-resistant resin composition contains the component (A) that is at least one kind of silane-modified polyethylene or a silane-modified ethylene-$\alpha$-olefin copolymer having a density before silane modification of 0.850 to 0.900 g/cm$^3$ in an amount of 10 to 80 mass% with respect to the whole of the components (A) to (D), the component (B) that is a polyolefin resin in an amount of 3 to 60 mass% with respect to the whole of the components (A) to (D), the component (C) that is at least one kind of a styrene-based elastomer or ethylene-$\alpha$-olefin copolymer rubber in an amount of 10 to 50 mass% with respect to the whole of the components (A) to (D), the component (D) that is a paraffin-based oil in an amount of 5 to 60 mass% with respect to the whole of the components (A) to (D), and the component (E) that is a silanol condensation catalyst in an amount of 0.005 to 0.5 parts by mass with respect to 100 parts by mass of the whole of the components (A) to (D).

CITATION LIST

PATENT LITERATURE

Patent Literature 1: JP-A-2018-012817 ("JP-A" means an unexamined published Japanese patent application)
Patent Literature 2: JP-A-2020-105319
Patent Literature 3: JP-A-2014-009238

SUMMARY OF THE INVENTION

TECHNICAL PROBLEM

In recent years, environmentally friendly vehicles in the world have been rapidly developed around electric vehicles (EV). An increase in diameters of electric wires requires insulating coating materials to have higher flexibility, particularly from the viewpoints of increasing the current of hybrid vehicles and electric vehicles, ease of wiring, space saving, and the like. From the viewpoint of imparting flexibility to an insulating coating material, low density polyethylene having a density of 0.910 or more and less than 0.930 has been used as a resin material, but it has been difficult to impart further high flexibility to an insulating coating material using low density polyethylene.

The flexibility can be improved by increasing the amount of comonomer components in an ethylene-based copolymer such as an ethylene-vinyl acetate copolymer (EVA), an ethylene-ethyl acrylate copolymer (EEA), an ethylene-methyl acrylate copolymer (EMA), or an ethylene-butyl acrylate copolymer (EBA), but the insulating property deteriorates due to an increase in the ratio of a polar component, and contact wear with a metal die during extrusion processing is increased due to an increase in the adhesion to a metal, and as a result, the appearance and the productivity of the product may deteriorate.

Furthermore, fillers such as a flame retardant and an antioxidant are highly blended in order to further enhance the flame retardancy and the heat resistance, but fillers having a small particle diameter easily reaggregate to cause, for example, clogging of a screen mesh easily at the time of producing a compound using a feeder ruder or a twin-screw extruder.

In view of the above circumstances, the present invention provides a resin composition that can be used for forming an insulating film (resin-coating material layer) of an insulated wire to further enhance flexibility (a flexible property) of the insulated wire and enhance chemical resistance (oil resistance) while sufficiently maintaining excellent characteristics (an insulating property, processability, flame retardancy, heat resistance, cold resistance, mechanical characteristics, and the like) of a conventional resin-coating material, and is further excellent in compound productivity (clogging of a screen mesh is less likely to occur). The present invention further provides a resin-coating material using the resin composition, an insulated wire including a layer of the resin-coating material, a vehicle wire harness including the insulated wire, and a method of producing the vehicle wire harness.

SOLUTION TO PROBLEM

As a result of studies to solve the above-described problems, the present inventors have found that in a resin composition for an insulating coating material in a case where an ethylene-α-olefin copolymer including an α-olefin component having 4 to 12 carbon atoms is used as a base resin, if the crystallinity of the copolymer is set within a specific range, a wet dispersant is blended in a specific amount, and an antioxidant and a crosslinking aid are further blended, the obtained resin composition has more excellent flexibility and excellent chemical resistance while sufficiently maintaining excellent characteristics of a conventional resin-coating material, and, for example, the dispersibility of fillers is enhanced by the action of the wet dispersant, and thus in production of a compound using the resin composition, clogging of a screen mesh in a feeder ruder, a twin-screw extruder, or the like is also suppressed (the productivity of the compound is excellent). The present inventors further intensively conducted studies based on these findings, and have completed the present invention.

That is, the above-described problems have been solved by the following means.

<1> A resin composition, including:

a component (A) being a base resin containing an ethylene-α-olefin random copolymer including an α-olefin component having 4 to 12 carbon atoms;
a component (B) being a wet dispersant;
a component (C) being an antioxidant; and
a component (D) being a crosslinking aid,

wherein the ethylene-α-olefin random copolymer including the α-olefin component having 4 to 12 carbon atoms has a crystallinity of 15 to 24%, and wherein a content of the component (B) is 2 to 10 parts by mass with respect to 100 parts by mass of a content of the component (A).
<2> The resin composition described in <1>, including a component (E) being a softener.
<3> The resin composition described in <2>, wherein the component (E) is a chain hydrocarbon polymer and/or a hindered amine compound.
<4> The resin composition described in any one of <1> to <3>, wherein the component (A) contains at least one kind of a styrene-based elastomer, ethylene-propylene rubber, and an olefin-based block copolymer.
<5> The resin composition described in any one of <1> to <4>, wherein a content of the component (C) is 10 to 30 parts by mass with respect to 100 parts by mass of the content of the component (A).
<6> The resin composition described in any one of <1> to <5>, wherein a content of the component (D) is 0.5 to 6 parts by mass with respect to 100 parts by mass of the content of the component (A).
<7> The resin composition described in any one of <1> to <6>, to be used for forming a resin-coating material for an insulated wire included in a vehicle wire harness.

<8> A resin-coating material obtainable by crosslinking the resin composition described in any one of <1> to <7>.

<9> An insulated wire including an insulating film including the resin-coating material described in <8>.

<10> A vehicle wire harness, including the insulated wire described in <9>.

<11> A method of producing a vehicle wire harness, including the steps of:

extrusion-coating a conductor with the resin composition described in any one of <1> to <7> to provide a resin composition layer; and
irradiating the resin composition layer with an electron beam of 80 to 250 kGy.

ADVANTAGEOUS EFFECTS OF INVENTION

The resin composition of the present invention is excellent in productivity of a compound, and can be used for forming an insulating film (resin-coating material layer) of an insulated wire to obtain an insulated wire excellent in flexibility and chemical resistance while sufficiently maintaining excellent characteristics of a conventional resin-coating material. The vehicle wire harness of the present invention includes an insulated wire including an insulating film including the resin-coating material, and is excellent in flexibility and chemical resistance (oil resistance). According to the method of producing a vehicle wire harness of the present invention, a vehicle wire harness having the above-described excellent characteristics or superiority can be obtained.

DESCRIPTION OF EMBODIMENTS

[Resin composition]

The resin composition of the present invention contains (A) a base resin containing an ethylene-$\alpha$-olefin random copolymer including an $\alpha$-olefin component having 4 to 12 carbon atoms (also referred to as component (A)), (B) a wet dispersant (also referred to as component (B)), an antioxidant (C) (also referred to as component (C)), and a crosslinking aid (D) (also referred to as component (D)). In the present invention, the phrase "containing the components (A) to (D)" is synonymous with the phrase "including the components (A) to (D) blended". In the present invention, unless otherwise specified, the term "resin" is used as a concept including an elastomer (that is, as a resin and/or an elastomer).

The components (A) to (D) and optional components described below may be used singly, or may be used in combination of two or more kinds.

Hereinafter, the components contained in the resin composition of the present invention will be described.

<(A) Base resin>

The resin composition of the present invention contains a base resin containing an ethylene-$\alpha$-olefin random copolymer including an $\alpha$-olefin component having 4 to 12 carbon atoms (hereinafter, also simply referred to as "ethylene-$\alpha$-olefin copolymer") (hereinafter, also simply referred to as "base resin"). From the viewpoint of further improving the chemical resistance, the content of the ethylene-$\alpha$-olefin copolymer in the base resin is preferably 50 mass% or more, more preferably 60 mass% or more, still more preferably 70 mass% or more, still more preferably 80 mass% or more, still more preferably 90 mass% or more, and still even more preferably 95 mass% or more. The whole of the base resin may be the ethylene-$\alpha$-olefin copolymer.

The base resin can contain another polymer described below in the rest excluding the ethylene-$\alpha$-olefin copolymer.

((A1) Ethylene-$\alpha$-olefin random copolymer including $\alpha$-olefin component having 4 to 12 carbon atoms)

In the present invention, the $\alpha$-olefin in the component (A1) is not particularly limited as long as it has 4 to 12 carbon atoms, and examples of the $\alpha$-olefin include 1-butene, 1-hexene, 4-methyl-1-pentene, 1-octene, 1-decene, and 1-dodecene. The component (A1) may include a third component other than the ethylene component and the $\alpha$-olefin component as long as an effect of the present invention is not impaired.

The component (A1) has a crystallinity of 15 to 24%. From the viewpoint of improving chemical resistance, the crystallinity is preferably 16% or more, more preferably 17% or more, and still more preferably 18% or more. From the viewpoint of improving flexibility, the crystallinity is preferably 23% or less, and more preferably 22% or less.

In the resin composition of the present invention, the crystallinity of the component (A1) is the crystallinity of the component (A1) to be blended.

In the present invention, the crystallinity means the crystallinity of the whole of the component (A1). That is, in the case of using two or more kinds of ethylene-$\alpha$-olefin copolymers as the component (A1), the crystallinity is the crystallinity of the whole of the two or more kinds of ethylene-α-olefin copolymers. The crystallinity of the whole of the component (A1) can be determined by calculation based on the crystallinity of each ethylene-α-olefin copolymer to be blended and the amount of the copolymer to be blended. For example, in the case of mixing an ethylene-α-olefin copolymer having a crystallinity of 10% and an ethylene-α-olefin copolymer having a crystallinity of 30% at a ratio of 7 : 3, the crystallinity of the whole of the component (A1) can be calculated as [10% × 0.7 + 30% × 0.3 = 16%].

The component (A1) is preferably a component including a mixture of two or more kinds of copolymers. For example, it is preferable to mix an ethylene-α-olefin copolymer having a crystallinity of 10% or more and 24% or less (component (A2)) and an ethylene-α-olefin copolymer having a crystallinity of more than 24% and less than 35% (component (A3)) and adjust the crystallinity of the component (A1) including the resulting mixture to 15% or more and 24% or less. In this case, in 100 parts by mass of the total amount of the component (A1), each component is preferably mixed so that the amount of the component (A2) is 60 to 100 parts by mass and the amount of the component (A3) is 0 to 40 parts by mass, more preferably mixed so that the amount of the component (A2) is 60 to 80 parts by mass and the amount of the component (A3) is 20 to 40 parts by mass, and still more preferably mixed so that the amount of the component (A2) is 70 to 80 parts by mass and the amount of the component (A3) is 20 to 30 parts by mass.

The crystallinity of the component (A1) can be determined by determining an endothermic peak area (J) with an ordinarily used method using a differential scanning calorimeter and calculating a melting heat amount (J/g) from the endothermic peak area (J) and the sample amount (g). In this case, the crystallinity (%) can be determined with (Formula 1) described below.

Crystallinity (%) = (melting heat amount/complete crystal melting heat amount) × 100          (Formula 1)

The measurement conditions with the differential scanning calorimeter are set to a nitrogen gas atmosphere (nitrogen gas flow rate: 50 mL/min) and a temperature rising or falling rate of 10°C/min. As the "complete crystal melting heat amount", a known value can be used. For example, data from TA Instruments can be used. As for a resin in which the "complete crystal melting heat amount" is unknown, the complete crystal melting heat amount of high density polyethylene of "293 J/g" is adopted as the complete crystal melting heat amount of the resin, and the crystallinity is calculated. As the differential scanning calorimeter, for example, DSC6200 (trade name) manufactured by Hitachi High-Tech Science Corporation can be used.

In the case of using a commercially available product as the component (A1), the value of the crystallinity described in the catalog can be adopted as the crystallinity of the component (A1).

The component (A1) also preferably has a density of 0.865 g/cm$^3$ to 0.880 g/cm$^3$.

The component (A1) can be synthesized with an ordinarily used method, and a commercially available product can be used. Specific examples of the commercially available product include ENGAGE 7467 (trade name, ethylene-butene polyolefin elastomer, manufactured by The Dow Chemical Company), ENGAGE 8150 (trade name, ethylene-octene polyolefin elastomer, manufactured by The Dow Chemical Company), and ENGAGE 8452 (trade name, ethylene-octene polyolefin elastomer, manufactured by The Dow Chemical Company).

(Another polymer)

The base resin can contain another polymer as a polymer other than the component (A1) as long as an effect of the present invention is not impaired. Examples of another polymer include at least one kind of a styrene-based elastomer, ethylene-propylene rubber, and an olefin-based block copolymer.

The styrene-based elastomer is a copolymer block of constituent components derived from an aromatic vinyl compound and a conjugated diene compound, and/or a hydrogenated product of a block copolymer or a random copolymer mainly including constituent components derived from the above-described compounds. As the aromatic vinyl compound, for example, one kind or two or more kinds can be selected from styrene, α-methylstyrene, vinyltoluene, p-tert-butylstyrene, and the like, and among them, styrene is preferable. As the conjugated diene compound, for example, one kind or two or more kinds can be selected from butadiene, isoprene, 1,3-pentadiene, 2,3-dimethyl-1,3-butadiene, and the like, and among them, butadiene, isoprene, and a combination thereof are preferable.

As the styrene-based elastomer, a binary or ternary copolymer can be used that includes a polystyrene block and an elastomer block having a polyolefin structure.

The styrene-based elastomer preferably includes a constituent component derived from an aromatic vinyl compound at a content of 10 to 70 mass%. The content can be determined, for example, by measuring a UV absorption spectrum with an ultraviolet spectrophotometer using a chloroform solution.

Examples of a commercially available styrene-based elastomer include "SEPTON" (trade name, brand name: 4033, type: SEEPS, styrene content: 30%, manufactured by Kuraray Co., Ltd.).

In the present invention or the present description, the ethylene-propylene rubber includes an ethylene-propylene binary copolymer, an ethylene-propylene-diene ternary copolymer, and the like, and in addition, olefin-based thermoplastic elastomers containing these as a main component (those including a polyolefin such as polypropylene or polyethylene as a hard segment and a rubber component such as ethylene-propylene rubber as a soft segment and having a structure in which the hard segment and the soft segment are microphase-separated).

Examples of a commercially available product of the ethylene-propylene-diene copolymer include EP123 (trade name, ENB content: 4.5%, ethylene content: 58%, manufactured by ENEOS Materials Corporation).

The olefin-based thermoplastic elastomers preferably have a hardness (durometer A) of 80 or less. Examples of a commercially available product of such an elastomer include MILASTOMER (registered trademark, product number: 4010NS, hardness (durometer A): 46, manufactured by Mitsui Chemicals, Inc.). The hardness (durometer A) is determined with a method in accordance with ISO 7619 2010.

The olefin-based block copolymer is a copolymer in which two kinds of polyolefins are alternately formed in a block shape in one molecule. Examples of the olefin-based block copolymer include an olefin-based block copolymer including an amorphous ethylene-octene block (soft) having a high comonomer content and a low glass transition temperature and a crystallizable ethylene-octene block (hard) having a very low comonomer content and a high melting temperature.

The olefin-based block copolymer preferably has a density of 0.89 g/cm$^3$ or less. The olefin-based block copolymer preferably has a melting point of 130°C or lower. Examples of a commercially available product of such an olefin-based block copolymer include INFUSE 9107 (trade name, olefin-based block copolymer (density 0.866 g/cm$^3$), melting point: 121°C, manufactured by The Dow Chemical Company).

From the viewpoint of further improving the flexibility, the content of another polymer described above in the component (A) is preferably 5 mass% or more, more preferably 10 mass% or more, and still more preferably 20 mass% or more. From the viewpoint of chemical resistance and crosslinkability, the content is preferably 50 mass% or less, more preferably 40 mass% or less, and still more preferably 30 mass% or less.

<(B) Wet dispersant>

The resin composition of the present invention contains (B) the wet dispersant. The wet dispersant is an additive having both a function as a wet material that acts as a surfactant to enhance the wettability of the dispersoid to the resin component and a function of preventing aggregation of the dispersoid by an action such as electrical repulsion or steric hindrance. The function as a wet material is usually performed by a chain compatible with the resin component, and the function of preventing aggregation of the dispersoid is usually performed by a group adsorptive to the dispersoid. When the resin composition of the present invention contains a specific amount of the wet dispersant, the dispersibility of fillers (for example, a flame retardant described below) blended can be improved, and the productivity of a compound of the resin composition can be improved. Examples of the wet dispersant include liquid or powdery (or flaky) wet dispersants, and powdery (or flaky) wet dispersants are preferable in terms of workability. The wet dispersant preferably has a drop point of 50°C or higher and a melting point of 100°C or lower.

In the present invention, a commercially available wet dispersant may be used as the component (B). Examples of the commercially available product include BYK-MAX D 4221 and BYK-MAX P 4102 (all trade names, manufactured by BYK Japan KK.).

As described above, the resin composition of the present invention contains 2 to 10 parts by mass of the component (B) with respect to 100 parts by mass of the content of the component (A). From the viewpoint of suppressing clogging of a mesh and occurrence of an aggregate and the viewpoint of suppressing occurrence of a bloom and inhibition of crosslinking, the resin composition preferably contains the component (B) in an amount of 3 to 9 parts by mass, more preferably 4 to 8 parts by mass, and still more preferably 5 to 7 parts by mass with respect to 100 parts by mass of the content of the component (A).

<(C) Antioxidant>

The resin composition of the present invention contains (C) the antioxidant. Examples of the component (C) include phenol compounds (phenol-based antioxidants), imidazole compounds (imidazole-based antioxidants), and thioether compounds (thioether-based antioxidants), and one kind or two or more kinds of these can be used.

From the viewpoint of improving the heat resistance, the resin composition of the present invention preferably contains the component (C) in an amount (when the resin composition contains a plurality of antioxidants, a total amount of the antioxidants) of 10 to 30 parts by mass, and more preferably 14 to 22 parts by mass with respect to 100 parts by mass of the content of the component (A).

(Phenol-based antioxidant)

Examples of the phenol-based antioxidant usable in the resin composition of the present invention include triethyleneglycol-bis(3-(3-t-butyl-5-methyl-4-hydroxyphenyl)propionate), 1,6-hexanediol-bis(3-(3,5-di-t-butyl-4-hydroxyphenyl)propionate), pentaerythritol-tetrakis(3-(3,5-di-t-butyl-4-hydroxyphenyl)propionate, octadecyl-3-(3,5-di-t-butyl-4-hydroxyphenyl)propionate, 1,3,5-trimethyl-2,4,6-tris(3,5-di-t-butyl-4-hydroxybenzyl)benzene, tris(3,5-di-t-butyl-4-hydroxybenzyl)isocyanurate, and isooctyl-3-(3,5-di-t-butyl-4-hydroxyphenyl)propionate. Among them, antioxidants having two or more of 3,5-di-t-butyl-4-hydroxyphenyl groups or 3,5-di-t-butyl-4-hydroxybenzyl groups are preferable, and tris-(3,5-di-t-butyl-4-hydroxybenzyl)isocyanurate and pentaerythritol-tetrakis(3-(3,5-di-t-butyl-4-hydroxyphenyl)propionate) are particularly preferable, from the viewpoint of imparting high heat resistance to a vehicle wire harness.

In the present invention, a commercially available phenol-based antioxidant may be used. Examples of the commercially available product include Irganox 1010 (trade name, manufactured by BASF).

When the resin composition of the present invention contains a phenol-based antioxidant, the resin composition preferably contains the phenol-based antioxidant in an amount of 1 to 8 parts by mass, and more preferably 2 to 6 parts by mass with respect to 100 parts by mass of the content of the component (A) from the viewpoint of improving the heat resistance.

(imidazole-based antioxidant)

Examples of the imidazole-based antioxidant usable in the resin composition of the present invention include 2-sulfanyl benzimidazole, 2-sulfanyl methylbenzimidazole, 4-sulfanyl methylbenzimidazole, 5-sulfanyl methylbenzimidazole, and zinc salts thereof. Among them, 2-sulfanyl benzimidazole and its zinc salt are preferable.

In the present invention, a commercially available imidazole-based antioxidant may be used. Examples of the commercially available product include NOCRAC MBZ (trade name, manufactured by OUCHI SHINKO CHEMICAL INDUSTRIAL CO., LTD.)

When the resin composition of the present invention contains an imidazole-based antioxidant, the resin composition preferably contains the imidazole-based antioxidant in an amount of 8 to 16 parts by mass, and more preferably 10 to 14 parts by mass with respect to 100 parts by mass of the content of the component (A) from the viewpoint of improving the heat resistance.

(Thioether-based antioxidant)

Examples of the thioether-based antioxidant usable in the resin composition of the present invention include dilauryl 3,3'-thiodipropionate, dimyristyl 3,3'-thiodipropionate, distearyl 3,3'-thiodipropionate, and 2,2-bis{[3-(dodecylthio)-1-oxopropoxy]methyl}propane-1,3-diyl bis[3-(dodecylthio)propionate] (another name: bis[3-(dodecylthio)propionic acid]2,2-bis[[3-(dodecylthio)-1-oxopropyloxy]methyl]-1,3-propanediyl). Among them, 2,2-bis{[3-(dodecylthio)-1-oxopropoxy]methyl}propane-1,3-diyl bis[3-(dodecylthio)propionate] is preferable from the viewpoints of long-term thermal stability and improvement in extraction resistance.

In the resin composition of the present invention, a commercially available thioether-based antioxidant may be used. Examples of the commercially available product include ADK STAB AO-412S (trade name, manufactured by ADEKA Corporation).

When the resin composition of the present invention contains a thioether-based antioxidant, the resin composition preferably contains the thioether-based antioxidant in an amount of 0.5 to 4 parts by mass, and more preferably 1 to 3 parts by mass with respect to 100 parts by mass of the content of the component (A) from the viewpoint of improving the heat resistance.

<(D) Crosslinking aid>

The resin composition of the present invention contains (D) the crosslinking aid. Examples of the component (D) include polyfunctional compounds, and compounds having 2 or more (preferably 3 or more, and more preferably 3 to 6) ethylenically unsaturated bonds (carbon-carbon double bonds) in the molecule are preferable.

Specific examples of the component (D) include (meth)acrylate compounds such as polypropylene glycol diacrylate and trimethylolpropane triacrylate, allyl compounds such as triallyl cyanurate, maleimide compounds, and divinyl compounds.

In the present invention, a commercially available crosslinking aid may be used as the component (D). Examples of the commercially available product include Ogmont T200 (trade name, manufactured by SHIN-NAKAMURA CHEMICAL Co., Ltd.).

From the viewpoint of improving the heat resistance and the chemical resistance, the resin composition of the present invention preferably contains the component (D) in an amount of 0.5 to 6 parts by mass, more preferably 1 to 5 parts by mass, and still more preferably 2 to 4 parts by mass with respect to 100 parts by mass of the content of the component (A).

<Other components>

The resin composition of the present invention may contain components other than the above-described components (A) to (D), such as a softener, a flame retardant, a processing aid, and an additive described below, as long as an effect of the present invention is not impaired.

<(E) Softener>

The resin composition of the present invention preferably contains (E) a softener. As the component (E) usable in the present invention, a softener being liquid under conditions of room temperature (25°C) and atmospheric pressure (0.1 MPa) can be used among softeners generally used in insulating coating materials. One kind of the component (E) may be used singly, or two or more kinds of the components (E) may be used in combination.

Examples of the component (E) include naphthene-based or aromatic-based process oils, chain hydrocarbon polymers, hindered amine compounds, phthalic acid derivatives such as dioctyl phthalate and dibutyl phthalate, white oils, and mineral oils. Among them, the component (E) is preferably a chain hydrocarbon polymer and/or a hindered amine compound.

Examples of the chain hydrocarbon polymer include polybutene, polybutadiene, polyisoprene, and a polyisoprene-butadiene copolymer. Among them, polybutene is preferable.

The chain hydrocarbon polymer preferably has a number average molecular weight of 300 or more, and more preferably 900 or more. The number average molecular weight is preferably 10000 or less, more preferably 5000 or less, still more preferably 4000 or less, and still even more preferably 3500 or less. The range of the number average molecular weight is preferably 300 to 10000, more preferably 300 to 5000, still more preferably 900 to 4000, and still even more preferably 900 to 3500.

The hindered amine compound is preferably a NOR (alkoxyimino group) type hindered amine compound in which an imino group (>N-H) portion of a piperidine ring has a structure of an N-alkoxyl group (>N-OR), in contrast with an N-H type in which an imino group (>N-H) portion remains NH and an N-methyl type in which H is replaced with a methyl group. A resin composition having such a structure can be given flame retardancy. Specific examples of the NOR type hindered amine compound include bis(1-undecanoxy-2,2,6,6-tetramethylpiperidin-4-yl)carbonate.

In the present invention, a commercially available softener may be used as the component (E). Examples of the commercially available product include Polybutene HV-100 and Polybutene HV-1900 manufactured by ENEOS Corporation, and ADK STAB FP-T80 manufactured by ADEKA Corporation.

When the resin composition of the present invention contains the component (E), the resin composition preferably contains the component (E) in an amount of 9 parts by mass or more, more preferably 10 parts by mass or more, still more preferably 12 parts by mass or more, and still even more preferably 14 parts by mass or more with respect to 100 parts by mass of the component (A), from the viewpoint of further improving the chemical resistance and the flexibility. From the viewpoint of improving the chemical resistance, the resin composition preferably contains the component (E) in an amount of 21 parts by mass or less, more preferably 20 parts by mass or less, still more preferably 19 parts by mass or less, and still even more preferably 18 parts by mass or less with respect to 100 parts by mass of the component (A). The range of the content of the component (E) with respect to 100 parts by mass of the component (A) is preferably 9 to 21 parts by mass, more preferably 10 to 20 parts by mass, still more preferably 12 to 19 parts by mass, and still even more preferably 14 to 18 parts by mass.

<Flame retardant>

A flame retardant can be contained in the present invention as long as an effect of the present invention is not impaired. Examples of such a flame retardant include bromine-based flame retardants and antimony-based flame retardants. In the present invention, at least one of a bromine-based flame retardant or an antimony-based flame retardant is preferably contained, and both a bromine-based flame retardant and an antimony-based flame retardant are more preferably contained. The mixing ratio between the bromine-based flame retardant and the antimony-based flame retardant in terms of the molar ratio between the bromine element and the antimony element is preferably such that the molar ratio of the amount of bromine to the antimony element contained in the resin composition is within the range of 2 to 5 times. That is, the bromine-based flame retardant is preferably contained so as to have a bromine amount of 2 to 5 times the molar content of the antimony-based flame retardant.

When the resin composition of the present invention contains a flame retardant, the resin composition preferably contains the flame retardant in a total amount of 33 to 45 parts by mass with respect to 100 parts by mass of the content of the component (A).

(Bromine-based flame retardant)

The bromine-based flame retardant is preferably a bromine-containing compound. That is, the resin composition of the present invention preferably contains a bromine-containing compound as a flame retardant. Examples of the usable bromine-based flame retardant include organic bromine-containing flame retardants such as a brominated N,N'-ethylene bisphthalimide and its derivative compounds (referred to as "brominated N,N'-ethylene bisphthalimide compounds" collectively), N,N'-bis(bromophenyl)terephthalamide and its derivative compounds (referred to as "N,N'-bis(bromophenyl)terephthalamide compounds" collectively), a brominated bisphenol and its derivative compounds (referred to as "brominated bisphenol compounds" collectively), and a 1,2-bis(bromophenyl) alkane. Among them, for example, a brominated N,N'-ethylene bisphthalimide and/or 1,2-bis(pentabromophenyl)ethane are preferably used.

By using a brominated N,N'-ethylene bisphthalimide and/or a 1,2-bis(bromophenyl) alkane as a flame retardant, a resin-coating material can be formed in which almost no bleeding occurs.

As the bromine-based flame retardant used in the resin composition of the present invention, a commercially available bromine-based flame retardant may be used. Examples of the commercially available product include SAYTEX 8010 (trade name, manufactured by Albemarle Corporation).

When the resin composition of the present invention contains a bromine-based flame retardant, the resin composition preferably contains the bromine-based flame retardant in an amount of 15 to 35 parts by mass with respect to 100 parts by mass of the content of the component (A).

(Antimony-based flame retardant)

Examples of the antimony-based flame retardant include antimony trioxide, antimony tetraoxide, antimony pentoxide, and sodium antimonate. It is considered that antimony reacts with chlorine (halogen), the generated gas blocks oxygen, and thus formation of a carbonized layer is promoted and free radicals are trapped (function of stopping thermal decomposition chain reaction). Among the above-described antimony-based flame retardants, antimony trioxide is preferably contained in the present invention from the viewpoint of forming a further stable carbonized layer.

In the present invention, a commercially available antimony trioxide may be used. Examples of the commercially available product include PATOX-C (trade name, manufactured by Nihon Seiko Co., Ltd.).

When the resin composition of the present invention contains an antimony-based flame retardant, the resin composition preferably contains the antimony-based flame retardant in an amount of 5 to 15 parts by mass with respect to 100 parts by mass of the content of the component (A).

(Another flame retardant)

The resin composition of the present invention may contain a flame retardant that can be usually used in an insulating film of an insulated wire, other than the bromine-based flame retardant and the antimony-based flame retardant. Examples of such a flame retardant include metal hydroxides (hydroxide-based flame retardants) such as magnesium hydroxide and aluminum hydroxide. When the resin composition of the present invention contains a hydroxide-based flame retardant, the resin composition preferably contains the hydroxide-based flame retardant in an amount of 5 parts by mass or less, and more preferably 3 parts by mass or less with respect to 100 parts by mass of the content of the component (A).

<Processing aid>

The resin composition of the present invention preferably contains a processing aid as long as an effect of the present invention is not impaired. Preferred examples of the processing aid include metal soaps (lubricants).

Examples of the metal soap (lubricant) usable in the resin composition of the present invention include calcium stearate, zinc stearate, and magnesium stearate.

In the present invention, a commercially available metal soap may be used. Examples of the commercially available product include SHINACA LEAD ZS-101 (trade name, manufactured by Shinagawa Chemical industries Co., Ltd.).

When the resin composition of the present invention contains a metal soap, the resin composition preferably contains the metal soap in an amount of 0.5 to 2 parts by mass with respect to 100 parts by mass of the content of the component (A).

<Additive>

In the resin composition of the present invention, various additives, for example, a copper inhibitor, an ultraviolet absorber, a dispersant (dispersant other than the wet dispersant), a plasticizer, a filler, and a pigment may be appropriately blended as needed as long as an effect of the present invention is not impaired. Examples of such an additive include zinc compounds. Specific examples of the zinc compound include zinc sulfide and zinc oxide.

[Method of producing resin composition]

The resin composition of the present invention can be obtained by preparing the above-described components (A) to (D), and as needed, the above-described optional components, and melt-mixing the components with ordinarily used kneading equipment such as a batch-type kneader such as a roll, a kneader, or a Banbury mixer or a twin-screw extruder.

[Vehicle wire harness]

The vehicle wire harness of the present invention includes an insulated wire having a layer including a resin-coating material obtained by crosslinking the resin composition of the present invention, on the surface of a conductor (including a conductor bundle and a fiber core wire). In the vehicle wire harness of the present invention, the insulated wire may have an interlayer or a shielding layer between the conductor and the layer including a resin-coating material.
Hereinafter, the vehicle wire harness may be referred to simply as "wire harness" in several cases.

[Method of producing vehicle wire harness]

The vehicle wire harness of the present invention can be obtained through the steps of extrusion-coating a conductor with the resin composition of the present invention to provide a resin composition layer and irradiating the resin composition layer with an electron beam of 80 to 250 kGy. This electron beam irradiation causes a crosslinking reaction in the resin composition layer to form a resin-coating material layer. Insulated wires including the conductor and the resin-coating layer are bundled, and a connector is attached to the end to obtain a wire harness.
The conductor may be a single wire or a stranded wire, and may be a bare wire or a tin-plated or enamel-coated wire. Examples of the conductor-forming metal materials include an annealed copper, a copper alloy, and aluminum. The thickness of the layer including the resin-coating material that is formed on the periphery of the conductor is not particularly limited. However, usually it is about 0.15 to 5 mm.
The diameter and the material of the conductor, the thickness of the coating layer, etc. are not particularly limited, and are appropriately determined according to the purpose or the intended use of the insulated wire. The crosslinking reaction by electron beam irradiation can be carried out with a normal method under normal conditions, and is not limited. The electron beam-irradiation conditions are preferably 50 to 450 kGy, more preferably 80 to 250 kGy, still more preferably 80 to 200 kGy, and particularly preferably 80 to 160 kGy, in terms of irradiance level. The accelerating voltage is preferably 300 to 5000 keV, and more preferably 500 to 3000 keV.
Further, a multilayer structure may be formed by providing, for example, an interlayer or a shielding layer between the conductor and a coating layer or between coating layers.
The conditions for extrusion-forming the resin composition of the present invention are not particularly limited, as long as the resin composition of the present invention can be extruded. However, from the points that a load on an extruder (extrusion machine) can be lowered and a shape retaining property can be secured, the extruding temperature (head part) is preferably 100 to 230°C, and more preferably 120 to 200°C.
Other conditions for the extrusion forming can be appropriately set according to the purpose.
The screw configuration of the extruder is not particularly limited, and an ordinarily used full flight screw, double flight screw, tip-double flight screw, maddock screw, or the like may be used.

EXAMPLES

The present invention will be described in more detail based on examples and comparative examples given below, but the present invention is not meant to be limited by these.

[Examples 1 to 12 and Comparative Examples 1 to 5]

Table 1 below shows the materials for preparation of the resin compositions of Examples 1 to 12 and Comparative Examples 1 to 5. Details of the materials used are as follows.

<Used materials>

(Component (A): base resin)

-Component (A1): ethylene-α-olefin copolymer-

ENGAGE 7467: trade name, ethylene-butene polyolefin elastomer (crystallinity 12%, density 0.862 g/cm$^3$), manufactured by The Dow Chemical Company
ENGAGE 8150: trade name, ethylene-octene polyolefin elastomer (crystallinity 16%, density 0.868 g/cm$^3$), manufactured by The Dow Chemical Company
ENGAGE 8100: trade name, ethylene-octene polyolefin elastomer (crystallinity 18%, density 0.870 g/cm$^3$), manufactured by The Dow Chemical Company
ENGAGE 8452: trade name, ethylene-octene polyolefin elastomer (crystallinity 20%, density 0.875 g/cm$^3$), manufactured by The Dow Chemical Company
ENGAGE 7256: trade name, ethylene-octene polyolefin elastomer (crystallinity 23%, density 0.885 g/cm$^3$), manufactured by The Dow Chemical Company
ENGAGE 8003: trade name, ethylene-octene polyolefin elastomer (crystallinity 25%, density 0.885 g/cm$^3$), manufactured by The Dow Chemical Company
ENGAGE 8440: trade name, ethylene-octene polyolefin elastomer (crystallinity 27%, density 0.897 g/cm$^3$), manufactured by The Dow Chemical Company
ENGAGE 8480: trade name, ethylene-octene polyolefin elastomer (crystallinity 33%, density 0.902 g/cm$^3$), manufactured by The Dow Chemical Company

-Another polymer-

SEPTON: trade name, brand name 4033, type SEEPS, styrene content 30%, manufactured by Kuraray Co., Ltd.
EP123: trade name, ENB content 4.5%, ethylene content 58%, manufactured by ENEOS Materials Corporation
MILASTOMER: registered trademark, product number 4010NS, hardness (durometer A) 46, manufactured by Mitsui Chemicals, Inc.
INFUSE 9107: trade name, olefin-based block copolymer (density 0.866 g/cm$^3$), melting point 121°C, manufactured by The Dow Chemical Company {0058}

(Component (B): wet dispersant)
BYK-MAX D 4221: trade name, manufactured by BYK Japan KK.
(Component (C): antioxidant)

Phenol-based antioxidant: pentaerythritol-tetrakis(3-(3,5-di-t-butyl-4-hydroxyphenyl)propionate), phenol-based antioxidant, Irganox 1010 (trade name), manufactured by BASF
Imidazole-based antioxidant: zinc salt of 2-mercapto benzimidazole, NOCRAC MBZ (trade name), manufactured by OUCHI SHINKO CHEMICAL INDUSTRIAL CO., LTD.
Thioether-based antioxidant: 2,2-bis{[3-(dodecylthio)-1-oxopropoxy]methyl}propane-1,3-diyl bis[3-(dodecylthio)propionate], ADK STAB AO-412S (trade name), manufactured by ADEKA Corporation

(Component (D): crosslinking aid)
Polyfunctional polymer: trimethylolpropane trimethacrylate, Ogmont T200 (trade name), manufactured by SHIN-NAKAMURA CHEMICAL Co., Ltd.
(Component (E): softener)

Polybutene HV-100: trade name, polybutene (number average molecular weight: 980), manufactured by ENEOS Corporation
Polybutene HV-1900: trade name, polybutene (number average molecular weight: 2900), manufactured by ENEOS Corporation
ADK STAB FP-T80: trade name, bis(1-undecanoxy-2,2,6,6-tetramethylpiperidin-4-yl)carbonate, manufactured by ADEKA Corporation

(Flame retardant)

Bromine-based flame retardant: 1,2-bis(pentabromophenyl)ethane, SAYTEX 8010 (trade name), manufactured by Albemarle Corporation
Antimony: antimony trioxide, PATOX-C (trade name), manufactured by Nihon Seiko Co., Ltd.

(Processing aid)
Metal soap: zinc distearate, SHINACA LEAD ZS-101 (trade name), manufactured by Shinagawa Chemical industries Co., Ltd.

<Production of resin composition pellet>

Components in accordance with each composition shown in Table 1 below were melt-mixed at 180°C using a 75 L-Banbury mixer, and the mixture (compound) was ejected and pelletized through a screen mesh (number of meshes: 200) of an extruder to obtain a resin composition pellet.

[Performance evaluation]

Each resin composition (Examples 1 to 12 and Comparative Examples 1 to 5) produced as described above was subjected to the following performance evaluation.

<Compound production evaluation>

In production of each of the resin composition pellets, the presence or absence of replacement of the screen mesh due to clogging or the like was evaluated in accordance with the following evaluation criteria.

-Evaluation criteria-

⊙: Production of 200 kg or more of resin composition pellet in 4 batches was possible without replacement of the screen mesh.
○: Production of up to 50 kg of resin composition pellet in 1 batch needed no replacement of the screen mesh, but the screen mesh was replaced by the time when 200 kg of resin composition pellet was produced in 4 batches.
✕: The screen mesh was replaced by the time when 50 kg of resin composition pellet was produced in 1 batch.

<Flexibility (flexural rigidity) evaluation>

Each resin composition pellet obtained was used for extrusion-coating of a copper conductor (twist count 19/number of strands 26/diameter of strand 0.32 mm) using an extruder set at a temperature of 90 to 190°C. The formed resin composition layer was subjected to a crosslinking reaction by electron beam irradiation. Thus, an insulated wire (having a finished outer diameter of about 12.0 mm) having an insulating film with a thickness of 1.4 mm was obtained around a copper conductor having a cross-sectional area of 40 mm$^2$ ($\approx$ 40 sq). The crosslinking using an electron beam was conducted at an accelerating voltage of 3000 keV under the condition of 160 kGy.
In the evaluation of the flexibility (flexural rigidity), measurement was performed with a method in accordance with Japanese Industrial Standards JIS C6870-1-21:2018, Section 19, E17C. Each insulated wire (sample) described above was cut to a length of 400 mm, the cable (insulated wire) bent at 180 degrees was placed between plates arranged in parallel, the ends of the cable was fixed to the parallel plates, a load cell was placed on the plate, and the maximum load (N) was measured when the cable was bent until the bending interval became 100 mm. The obtained maximum load was evaluated in accordance with the following evaluation criteria.
The zero-point adjustment of the load cell was performed before attachment of the sample, and the test was performed at room temperature.

-Evaluation criteria-

⊙: The maximum load is less than 15 N.

○: The maximum load is 15 N or more and less than 20 N.

×: The maximum load is 20 N or more.

<Gasoline swelling resistance evaluation>

From each obtained resin composition pellet, a resin sheet having a thickness of 1.4 mm was prepared using an extruder set at a temperature of 90 to 190°C, and the resin sheet was irradiated with an electron beam to cause a crosslinking reaction. The resin sheet was punched into a dumbbell piece having a length of 15 mm × a width of 30 mm, and the dumbbell piece was used as a test piece. The test piece was immersed in gasoline at a temperature of 23 ± 5°C for 20 hours, and a sheet thickness change rate after 30 minutes from taking out of the test piece was measured using the following (Formula 2), and evaluated in accordance with the following evaluation criteria.

Change rate (%) = {(thickness of test piece after immersion - thickness of test piece before immersion)/thickness of test piece before immersion} × 100　　(Formula 2)

-Evaluation criteria-

⊙: The change rate is less than 5%.

○: The change rate is 5% or more and less than 10%.

×: The change rate is 10% or more.

Table 1 below shows the obtained results. The unit of the amount of each component blended described in the following table is parts by mass (mass ratio).

[Table 1-1]

| [Table 1] | | | Example 1 | Example 2 | Example 3 | Example 4 | Example 5 | Example 6 |
|---|---|---|---|---|---|---|---|---|
| Component (A) | | Component (A1) | 100 | 100 | 100 | 100 | 100 | 100 |
| | | ENGAGE 7467 | - | - | - | - | - | - |
| | | ENGAGE 8150 | 100 | - | 70 | 10 | 80 | 30 |
| | | ENGAGE 8100 | - | - | - | - | - | - |
| | | ENGAGE 8452 | - | 100 | - | 70 | - | - |
| | | ENGAGE 7256 | - | - | - | - | - | - |
| | | ENGAGE 8003 | - | - | - | - | - | 50 |
| | | ENGAGE 8440 | - | - | - | - | 20 | 20 |
| | | ENGAGE 8480 | - | - | 30 | 10 | - | - |
| | | SEPTON | - | - | - | - | - | - |
| | | EP 123 | - | - | - | - | - | - |
| | | MILASTOMER | - | - | - | - | - | - |
| | | INFUSE 9107 | - | - | - | - | - | - |
| Component (B) | | BYK-MAX D4221 | 2 | 3 | 10 | 5 | 6 | 8 |

(continued)

| [Table 1] | | Example 1 | Example 2 | Example 3 | Example 4 | Example 5 | Example 6 |
|---|---|---|---|---|---|---|---|
| Component (C) | Phenol-based antioxidant | 4 | 4 | 4 | 4 | 4 | 4 |
| | Imidazole-based antioxidant | 12 | 12 | 12 | 12 | 12 | 12 |
| | Thioether-based antioxidant | 2 | 2 | 2 | 2 | 2 | 2 |
| Component (D) | Polyfunctional monomer | 4 | 4 | 4 | 4 | 4 | 4 |
| Component (E) | Polybutene HV-100 | 10 | - | - | - | - | - |
| | Polybutene HV-1900 | - | 20 | - | 15 | - | - |
| | ADK STAB FP-T80 | - | - | - | - | - | 20 |
| Flame retardant | Bromine-based flame retardant | 30 | 30 | 30 | 30 | 30 | 30 |
| | Antimony-based flame retardant | 10 | 10 | 10 | 10 | 10 | 10 |
| Processing aid | Metal soap | 1 | 1 | 1 | 1 | 1 | 1 |
| Crystallinity of component (A1) | | 16% | 20% | 21% | 19% | 18% | 23% |
| Flexibility evaluation | | ⊙ | ⊙ | ○ | ○ | ○ | ○ |
| Gasoline swelling resistance evaluation | | ○ | ○ | ○ | ○ | ○ | ⊙ |
| Compound productivity evaluation | | ○ | ⊙ | ⊙ | ⊙ | ⊙ | ⊙ |

[Table 1-1] (continued)

| [Table 1] | | | Example 7 | Example 8 | Example 9 | Example 10 | Example 11 | Example 12 |
|---|---|---|---|---|---|---|---|---|
| Component (A) | | Component (A1) | 100 | 100 | 80 | 80 | 70 | 70 |
| | | ENGAGE 7467 | - | 40 | - | - | - | - |
| | | ENGAGE 8150 | - | - | - | - | - | - |
| | | ENGAGE 8100 | 40 | - | - | - | - | - |
| | | ENGAGE 8452 | 30 | - | 80 | 80 | - | - |
| | | ENGAGE 7256 | - | 30 | - | - | 70 | 70 |
| | | ENGAGE 8003 | - | - | - | - | - | - |
| | | ENGAGE 8440 | 30 | 30 | - | - | - | - |
| | | ENGAGE 8480 | - | - | - | - | - | - |
| | | SEPTON | - | - | 20 | - | - | - |
| | | EP123 | - | - | - | 20 | - | - |
| | | MILASTOMER | - | - | - | - | 30 | - |
| | | INFUSE 9107 | - | - | - | - | - | 30 |
| Component (B) | | BYK-MAX D4221 | 5 | 5 | 3 | 3 | 3 | 2 |
| Component (C) | | Phenol-based antioxidant | 4 | 4 | 4 | 4 | 4 | 4 |
| | | Imidazole-based antioxidant | 12 | 12 | 12 | 12 | 12 | 12 |
| | | Thioether-based antioxidant | 2 | 2 | 2 | 2 | 2 | 2 |
| Component (D) | | Polyfunctional monomer | 4 | 4 | 4 | 4 | 4 | 4 |
| Component (E) | | Polybutene HV-100 | - | - | 15 | - | - | - |
| | | Polybutene HV-1900 | - | - | - | - | - | - |
| | | ADK STAB FP-T80 | 10 | - | - | 20 | - | - |
| Flame retardant | | Bromine-based flame retardant | 30 | 30 | 30 | 30 | 30 | 30 |
| | | Antimony-based flame retardant | 10 | 10 | 10 | 10 | 10 | 10 |
| Processing aid | | Metal soap | 1 | 1 | 1 | 1 | 1 | 1 |

(continued)

[Table 1]

|  | Example 7 | Example 8 | Example 9 | Example 10 | Example 11 | Example 12 |
|---|---|---|---|---|---|---|
| Crystallinity of component (A1) | 21% | 20% | 20% | 20% | 23% | 23% |
| Flexibility evaluation | ○ | ○ | ⊙ | ⊙ | ○ | ○ |
| Gasoline swelling resistance evaluation | ⊙ | ○ | ○ | ○ | ○ | ⊙ |
| Compound productivity evaluation | ⊙ | ⊙ | ○ | ○ | ○ | ○ |

[Table 1-2]

[Table 1] (continued)

|  |  |  | Comparative Example 1 | Comparative Example 2 | Comparative Example 3 | Comparative Example 4 | Comparative Example 5 |
|---|---|---|---|---|---|---|---|
| Component (A) | Component (A1) |  | 100 | 100 | 100 | 100 | 100 |
|  |  | ENGAGE 7467 | 100 | - | - | 10 | - |
|  |  | ENGAGE 8150 | - | 100 | 70 | - | - |
|  |  | ENGAGE 8100 | - | - | - | - | - |
|  |  | ENGAGE 8452 | - | - | - | - | 100 |
|  |  | ENGAGE 7256 | - | - | - | - | - |
|  |  | ENGAGE 8003 | - | - | - | - | - |
|  |  | ENGAGE 8440 | - | - | - | 90 | - |
|  |  | ENGAGE 8480 | - | - | 30 | - | - |
|  |  | SEPTON 4033 | - | - | - | - | - |
|  |  | EP123 | - | - | - | - | - |
|  |  | MILASTOMER 4010NS | - | - | - | - | - |
|  |  | INFUSE9107 | - | - | - | - | - |
| Component (B) | BYK-MAX D4221 |  | 5 | 0.5 | - | 15 | - |

| [Table 1] (continued) | | Comparative Example 1 | Comparative Example 2 | Comparative Example 3 | Comparative Example 4 | Comparative Example 5 |
|---|---|---|---|---|---|---|
| Component (C) | Phenol-based antioxidant | 4 | 4 | 4 | 4 | 4 |
| | Imidazole-based antioxidant | 12 | 12 | 12 | 12 | 12 |
| | Thioether-based antioxidant | 2 | 2 | 2 | 2 | 2 |
| Component (D) | Polyfunctional monomer | 4 | 4 | 4 | 4 | 4 |
| Component (E) | Polybutene HV-100 | 15 | - | 3 | - | - |
| | Polybutene HV-1900 | - | 25 | - | - | 1 |
| | ADK STAB FP-T80 | - | - | - | - | - |
| Flame retardant | Bromine-based flame retardant | 30 | 30 | 30 | 30 | 30 |
| | Antimony-based flame retardant | 10 | 10 | 10 | 10 | 10 |
| Processing aid | Metal soap | 1 | 1 | 1 | 1 | 1 |
| Crystallinity of component (A1) | | 12% | 16% | 21% | 26% | 20% |
| Flexibility evaluation | | ⊙ | ⊙ | ○ | × | ○ |
| Gasoline swelling resistance evaluation | | × | × | × | ⊙ | × |
| Compound productivity evaluation | | ○ | × | × | ⊙ | × |

<Notes in Table>

The content of each component in Table is based on a mass part. A blank and the expression "-" mean that the corresponding component is not included.

As is apparent from Table 1, all of the resin compositions in which the crystallinity of the component (A1) was out of the prescribed range of the present invention (Comparative Examples 1 and 4) and the resin compositions in which the content of the component (B) was out of the prescribed range of the present invention (Comparative Examples 2 to 5) were inferior in at least one of the flexibility evaluation, the gasoline swelling resistance evaluation, or the compound productivity evaluation.

Meanwhile, all of the resin compositions satisfying all the prescriptions of the present invention (Examples 1 to 12) were excellent in the flexibility evaluation, the gasoline swelling resistance evaluation, and the compound productivity evaluation. These resin compositions had an insulating property, flame retardancy, durability, mechanical characteristics, and the like sufficient for a resin-coating material of an insulated wire.

Having described the present invention as related to the embodiment, it is our intention that the present invention not be limited by any of the details of the description, unless otherwise specified, but rather be construed broadly within its spirit and scope as set out in the accompanying claims.

The present application claims priority of Patent Application No. 2023-050983, filed in Japan on March 28, 2023, which is herein incorporated by reference as part of the present specification.

## Claims

1. A resin composition, comprising:

   a component (A) being a base resin containing an ethylene-$\alpha$-olefin random copolymer including an $\alpha$-olefin component having 4 to 12 carbon atoms;
   a component (B) being a wet dispersant;
   a component (C) being an antioxidant; and
   a component (D) being a crosslinking aid,

   wherein the ethylene-$\alpha$-olefin random copolymer including the $\alpha$-olefin component having 4 to 12 carbon atoms has a crystallinity of 15 to 24%, and
   wherein a content of the component (B) is 2 to 10 parts by mass with respect to 100 parts by mass of a content of the component (A).

2. The resin composition according to claim 1, comprising a component (E) being a softener.

3. The resin composition according to claim 2, wherein the component (E) is a chain hydrocarbon polymer and/or a hindered amine compound.

4. The resin composition according to any one of claims 1 to 3, wherein the component (A) contains at least one kind of a styrene-based elastomer, ethylene-propylene rubber, and an olefin-based block copolymer.

5. The resin composition according to any one of claims 1 to 4, wherein a content of the component (C) is 10 to 30 parts by mass with respect to 100 parts by mass of the content of the component (A).

6. The resin composition according to any one of claims 1 to 5, wherein a content of the component (D) is 0.5 to 6 parts by mass with respect to 100 parts by mass of the content of the component (A).

7. The resin composition according to any one of claims 1 to 6, to be used for forming a resin-coating material for an insulated wire included in a vehicle wire harness.

8. A resin-coating material obtainable by crosslinking the resin composition according to any one of claims 1 to 7.

9. An insulated wire comprising an insulating film including the resin-coating material according to claim 8.

10. A vehicle wire harness, comprising the insulated wire according to claim 9.

11. A method of producing a vehicle wire harness, comprising the steps of:

   extrusion-coating a conductor with the resin composition according to any one of claims 1 to 7 to provide a resin composition layer; and
   irradiating the resin composition layer with an electron beam of 80 to 250 kGy.

## INTERNATIONAL SEARCH REPORT

| International application No. |
|---|
| **PCT/JP2024/006555** |

### A. CLASSIFICATION OF SUBJECT MATTER

*C08L 23/08*(2006.01)i; *C08J 7/00*(2006.01)i; *C08K 5/13*(2006.01)i; *C08K 5/17*(2006.01)i; *C08K 5/372*(2006.01)i; *C08K 5/3445*(2006.01)i; *C08L 53/00*(2006.01)i; *C08L 91/08*(2006.01)i; *H01B 7/00*(2006.01)i; *H01B 13/14*(2006.01)i
FI: C08L23/08; C08L53/00; C08K5/13; C08K5/3445; C08K5/372; C08L91/08; C08K5/17; C08J7/00 305; H01B7/00 301; H01B13/14 A; C08J7/00 CES

According to International Patent Classification (IPC) or to both national classification and IPC

### B. FIELDS SEARCHED

Minimum documentation searched (classification system followed by classification symbols)

C08L23/08; C08J7/00; C08K5/13; C08K5/17; C08K5/372; C08K5/3445; C08L53/00; C08L91/08; H01B7/00; H01B13/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-187970 A (THE FURUKAWA ELECTRIC CO., LTD.) 13 December 2021 (2021-12-13) | 1-11 |
| A | JP 2004-35618 A (RIKEN TECHNOS CORPORATION) 05 February 2004 (2004-02-05) | 1-11 |
| A | JP 2014-37515 A (IDEMITSU UNITECH CO., LTD.) 27 February 2014 (2014-02-27) | 1-11 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 March 2024** | **09 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/006555**

| Patent document cited in search report | | | Publication date (day/month/year) | Patent family member(s) | Publication date (day/month/year) |
|---|---|---|---|---|---|
| JP | 2021-187970 | A | 13 December 2021 | (Family: none) | |
| JP | 2004-35618 | A | 05 February 2004 | (Family: none) | |
| JP | 2014-37515 | A | 27 February 2014 | (Family: none) | |

Form PCT/ISA/210 (patent family annex) (July 2022)

**REFERENCES CITED IN THE DESCRIPTION**

**Patent documents cited in the description**

- JP 2018012817 A
- JP 2020105319 A
- JP 2014009238 A